# EUROPEAN PATENT APPLICATION

(11) **EP 4 513 706 A1**
(43) Date of publication of application: **26.02.2025**
(21) Application number: 23193028.0
(22) Date of filing: 23.08.2023
(51) Int. Cl.: H02J 3/38, C25B 1/04, C25B 15/02

(54) **ELECTROLYSIS CONTAINER, ELECTROLYSIS SYSTEM, METHOD FOR OPERATING AN ELECTROLYSIS SYSTEM, COMPUTER PROGRAM AND A CONTROLLER**

(71) Applicant: Siemens Energy Global GmbH & Co. KG, 81739 München (DE)
(72) Inventor: Craciun, Bogdan, 18069 Rostock (DE); Runser, Thibaut, 90478 Nürnberg (DE); Schumann, Sven, 91452 Wilhermsdorf (DE); Bartmann, Andreas, 91056 Erlangen (DE)

(57) **Abstract**

The present invention pertains to an electrolysis container (1) comprising a main power controller (2) and a plurality of electrolyzer stacks (3) that are connected to the main power controller (2) via a switching arrangement (4), wherein the main power controller (2) comprises a downscaled converter (7) and an upscaled converter (8) that are connected in parallel. If at least one electrolyzer stack (3) from the plurality of electrolyzer stacks (3) is disconnected from the main power controller (2) by means of the switching arrangement (4), the main power controller (2) only activates the downscaled converter (7) whereas only the upscaled converter (8) is activated when all electrolyzer stacks (3) are connected to the main power controller (2). This provides an up-scaling and downscaling of the modified electrolysis container (1) for increasing the operating range to lower electrical power input (15) levels provided by a renewable electrical energy source (6).

## Description

### Technical Field

The invention relates to an electrolysis container, an electrolysis system, a method for operating an electrolysis system, a computer program and a controller.

### Technological Background

Electrical power produced by means of a renewable electrical energy source such as a wind turbine or a solar power unit are produced in a stochastic and unpredictable manner and are therefore subject to variations in electrical power production. An efficient method for storing a surplus production of electrical power is by producing an energy carrier such as hydrogen by means of an electrolysis process. For a large scale production, the electrolysis process is conducted by means of electrolysis containers. Particularly, decentralized hydrogen production comes with its own challenges concerning system stability and increased energy harvesting by means of hydrogen production. On the one hand, the renewable electrical energy source must produce a maximum amount of electrical energy provided by the environmental conditions such as wind speed and/or solar irradiation whereas on the other hand, a maximum amount of hydrogen needs to be produced in order to reduce a levelized cost of hydrogen (LCOH).

However, variations of the production of electrical power due to the changing environmental conditions may cause the produced electrical power to drop below a minimum level for the production of hydrogen. Thus, blind spots may occur in the production of hydrogen where no hydrogen is produced due to an amount of electrical power that is not sufficient due to a low wind speed and/or solar irradiation for instance. The topic of this application targets the avoidance of those blind spots for increasing the production of hydrogen or other energy carriers.

### Summary of the invention

It is an object of the present invention to provide an improved electrolysis container with an increased operating range for the production of an energy carrier by means of renewable energies.

A solution is provided by the subject matter according to the independent claims. Advantageous additional embodiments of the invention are described by the dependent claims, the following description and the Figures.

The invention relates to an electrolysis container with the features of claim 1, comprising a main power controller and a plurality of electrolyzer stacks that are connected via a switching arrangement to the main power controller that is adapted to convert by means of a converter an electrical power input from an electrical energy source, particularly from a renewable electrical energy source, to an electrical power output for the electrolyzer stacks, wherein the main power controller is adapted to disconnect at least one electrolyzer stack by means of a switching element of the switching arrangement, wherein the converter comprises a downscaled converter and an upscaled converter and is adapted to activate only the downscaled converter if at least one electrolyzer stack is disconnected from the main power controller.

In other words, the main power controller may be adapted to output a direct current for the plurality of electrolyzer stacks, particularly the connected electrolyzer stack that may correspond to a minimum level of electrical power and/or an electrical voltage for the respective electrolyzer stack to be operative. The main power controller may be adapted to convert an alternating current or a direct current from an electrical network and/or the electrical energy source to the direct current for the plurality and/or a subset of electrolyzer stacks.

The switching arrangement may be an electrical circuit that connects the plurality of electrolyzer stacks to the main power controller for receiving the electrical power output from the main power controller. Additionally, the switching arrangement may be adapted to disconnect at least one electrolyzer stack, particularly a subset of disconnected electrolyzer stacks from the plurality of electrolyzer stacks, from the main power controller. For that, the switching arrangement may comprise a switching element, such as a direct current disconnector, that may electrically be arranged between two electrolyzer stacks from the plurality of electrolyzer stacks. For instance, the switching arrangement may comprise a switching element for disconnecting the at least one electrolyzer stack, particularly a subset of electrolyzer stacks, from the main power controller. The electrolyzer stacks may be electrically connected in series via the switching arrangement wherein the switching arrangement may further be adapted to disconnect at least one electrolyzer stack from the main power controller.

The main power controller may comprise at least two converters wherein at least one converter, particularly the downscaled converter, may be adapted to output a direct current for a subset of connected electrolyzer stacks from the plurality of electrolyzer stacks that is still connected to the main power controller via the switching arrangement after the subset of disconnected electrolyzer stacks has been disconnected from the main power controller by means of the switching element. Thus, the downscaled converter may be adapted to convert a reduced electrical power input from the electrical network to a reduced electrical power output for the subset of connected electrolyzer stacks wherein a voltage of the direct current for the subset of connected electrolyzer stacks may be scaled to a level for the subset of connected electrolyzer stacks to be operative. The main power controller may comprise at least one downscaled electrical converter.

The upscaled converter may be adapted to convert the electrical power input from the electrical network to the electrical power output for the plurality of electrolyzer stacks, particularly for all electrolyzer stacks, wherein the upscaled converter is adapted to provide a direct current that is sufficient for the plurality of electrolyzer stacks, particularly all electrolyzer stacks, to be operative.

The downscaled and upscaled converters of the main power controllers may be connected in parallel wherein only one converter may be activated, particularly depending on if at least one electrolyzer stacks is disconnected from the main power controller by means of the switching arrangement and/or the switching element. Thus, the main power controller may be adapted to activate either the downscaled or the upscaled converter depending on whether the plurality of electrolyzer stacks, particularly all electrolyzer stacks, or a subset of connected electrolyzer stacks is connected to the main power controller.

The electrical network may be supplied with electrical power from at least one renewable electrical energy source such as a wind turbine or a solar power unit for instance. The problem of renewable electrical power sources is that they are subject to variations in a production of electrical power due to changing environmental conditions such as a changing wind speed and/or solar irradiation. This may result in a reduced generation of electrical power that may be supplied to an electrical network and which may further not be harvested as the standard electrolysis containers require a minimum input of electrical power for converting the electrical power into an energy carrier.

Thus, the modified electrolysis container as described above provides the advantage that it is adapted to be operative with a reduced electrical power input received from a renewable electrical energy source by disconnecting at least one electrolyzer stack from the plurality of electrolyzer stacks and thus downscaling the electrical power input in order for the subset of electrolyzer stacks to remain operative. Hence, said electrolyzer container provides an increased operating range for converting electrical power into an energy carrier when production of electrical power of the renewable electrical energy source is low, for instance due to a low wind speed and/or solar irradiation.

The invention also includes embodiments by which additional advantages are obtained.

In one embodiment, the downscaled converter is adapted to output a downscaled electrical power output and the upscaled converter is adapted to output an upscaled electrical power output, particularly a respective minimum electrical power for the electrolyzer stack that is connected to the main power controller to be operative. In other words, the downscaled converter may be adapted to convert an amount of electrical power inferior to the upscaled electrical converter wherein the downscaled electrical converter is adapted to provide the minimum electrical power, particularly a direct current level that is sufficient for the subset of connected electrolyzer stacks to be operative. For instance, the downscaled converter may be adapted to output a direct current voltage that is inferior to a direct current voltage being output by the upscaled converter. This provides the advantage that said electrolysis container may also be operative when only an inferior amount of electrical power is provided by the renewable electrical energy source due to a low wind speed and/or solar irradiation. Thus, electrical energy may also be harvested by means of said electrolysis container when production of electrical power is low which increases an overall production of the energy carrier such as hydrogen.

In one embodiment, the main power controller is adapted to activate only the upscaled converter if all electrolyzer stacks are connected to the main power controller and/or if none electrolyzer stack is disconnected from the main power controller. In other words, the downscaled electrolyzer converter may only be activated if at least one electrolyzer stack is disconnected from the main power controller. The electrical power output of the downscaled and/or upscaled converter may be adjusted, particularly be powered up or down, to an electrical power output level of zero. Thus, activating or deactivating the downscaled converter may mean to power up or to power down the respective downscaled or upscaled converter.

Additionally or alternatively, the upscaled and downscaled converter may be connected in parallel and may respectively be activated by means of a switching element of the main power controller that may be switched in line with the switching element of the switching arrangement for connecting or disconnecting at least one electrolyzer stack. Thus, activating or deactivating the downscaled converter may mean to connect or disconnect the respective downscaled or upscaled converter to or from the switching arrangement and/or the plurality of electrolyzer stacks, particularly the subset of connected electrolyzer stacks.

This provides the advantage that the electrolyzer stacks may not be damaged when the electrolysis container is converted to downscaled or upscaled operation. Thus, electrical energy may be harvested without damaging the electrolyzer stacks. In one embodiment, the main power controller is adapted to activate only the downscaled converter if the electrical power input from the electrical energy source is below a second threshold value and/or the main power controller is adapted to deactivate the downscaled converter if the electrical power input from the electrical energy source is above the second threshold value, and/or wherein the main power controller is adapted to disconnect at least one electrolyzer stack from the main power controller if the electrical power input from the electrical energy source is below the second threshold value or above the second threshold value and below a third threshold value.

In other words, the main power controller may be adapted to measure a level of electrical power input that is fed at a terminal to the main power controller, for instance electrical energy that is fed directly from an electrical energy source in an island configuration or that is fed via the electrical network from the electrical energy source in a network configuration. Here, the third threshold value may be greater than the second threshold value.

Additionally or alternatively, the main power controller may be adapted to receive an information of electrical power currently produced from a generator controller of the renewable electrical energy source as the electrical power input via a communication interface.

If the electrical power input is below the second threshold value and additionally above a minimum electrical power input level, the main power controller may be adapted to disconnect at least one electrolyzer stack from the plurality of electrolyzer stacks, particularly to connect only a subset of the electrolyzers to the main power controller, and further to activate the downscaled converter.

Additionally, if the electrical power input is below the second threshold value and additionally above the minimum electrical power input, the main power controller may be adapted to initiate or power up the downscaled converter and/or to connect the subset of electrolyzer stacks to the main power controller by means of the switching arrangement. Initiating or powering up the downscaled and/or upscaled converter may mean to adjust an electrical power output level that is not zero. Said minimum electrical power input may correspond to a cut-in wind speed for a wind turbine and/or a minimum solar irradiation.

Further, the main power controller may be adapted to increase the electrical power output by means of the downscaled converter up to a peak value at a first threshold value of electrical power input that may be smaller than the second threshold value.

Additionally, if the electrical power input is between the first threshold value and the second threshold value, the main power controller may be adapted to decrease the electrical power output by means of the downscaled converter until the electrical power output may reach zero when the electrical power input may reach the second threshold value. In other words, the downscaled converter may output an electrical power output of zero when the electrical power input may reach the second threshold value. For instance, a standard electrolysis container corresponding to said electrolysis container may be adapted to start operation when the electrical power input from the electrical energy source may reach the first threshold value.

This provides the advantage that an operating range of said electrolysis container may be increased without damaging the electrolyzer stacks. This allows further to close blind spots in cooperation with other standard electrolysis containers for energy harvesting when said electrolysis container is converted by connecting all electrolyzer stacks to the main power controller, where no energy carrier may be produced.

In one embodiment, the main power controller is adapted to activate the upscaled converter if the electrical power input from the electrical energy source is above the second threshold value or above the third threshold value and/or the main power controller is adapted to deactivate the upscaled converter if the electrical power input from the electrical energy source is below the second threshold value or below the third threshold value, wherein preferably the third threshold value is greater than the second threshold value, and/or wherein the main power controller is adapted to connect the at least one disconnected electrolyzer stack to the main power controller if the electrical power input from the electrical energy source is above the second threshold value and/or below the third threshold value.

In other words, the main power controller of the modified electrolysis container may be adapted to deactivate the downscaled converter and optionally to connect all electrolyzer stacks from the plurality of electrolyzer stacks, particularly the subsect of disconnected electrolyzer stacks, to the upscaled converter and additionally to activate the upscaled converter if the electrical power input level is above the second threshold value. If the electrical power input level reaches the third threshold value, which may be greater than the second threshold value, the main power controller may be adapted to activate the upscaled converter in order to start producing the energy carrier by means of the plurality of electrolysis stacks.

Additionally, the main power controller may be adapted to connect all electrolyzer stacks or the disconnected electrolyzer stack and optionally to activate the upscaled converter if the electrical power input is increasing over a time threshold value, for instance over at least three cycles of the main power controller, whereas the main power controller may be adapted to disconnect at least one electrolyzer stack if the electrical power input is decreasing for a time threshold value, for instance over at least three cycles of the main power controller. The time threshold values may be equal or different.

Thus, if the electrical power input is above the second threshold value, the main power controller may be adapted to convert a modified electrolysis container to a standard electrolysis container by deactivating the downscaled converter and by connecting all electrolyzer stacks to the main power controller, particularly to the subset of disconnected electrolyzer stacks, by means of the switching element and additionally by activating the upscaled converter. The electrical power input may originate from a renewable electrical energy source and may optionally be received via an electrical network.

This provides the advantage that the electrolysis container may be adapted to different electrical power input levels without damaging the electrolyzer stacks. This allows an increased operating range for an electrolysis container to produce the energy carrier even at low wind speeds and/or solar irradiation, for instance. Thus more energy carrier may be produced wherein the energy carrier may be hydrogen or a synthetic fuel, for instance.

The electrolysis container as a modified electrolysis container may also be adapted to cooperate with other, standard electrolysis containers in an electrolysis system. The standard electrolysis containers may also comprise the plurality of electrolyzer stacks but a different main power controller that only may comprise one converter, particularly corresponding to the upscaled converter. Here, said third threshold value for the electrical power input may be above the second threshold value.

If the electrical power input from the electrical network is between the second and third threshold value, the main power controller of the respective standard electrolysis container may be adapted to activate the converter if the electrical power input value from the electrical energy source is above the second threshold value.

Thus, when the electrical power input value is above the second and below the third threshold value, other standard electrolysis containers may be adapted to be activated by their respective main power controller for producing the energy carrier and thus providing energy harvesting by converting electrical power into the energy carrier.

Additionally, the main power controller of the respective standard electrolysis container may be adapted to activate the converter at a respective first threshold value for the electrical power input that is between the second and third threshold value. This provides the advantage that the respective standard electrolysis containers may be activated in a sequence.

This provides the advantage that the modified electrolysis container may cooperate with other standard electrolysis containers and be converted into a standard or modified electrolysis container depending on the electrical power input level currently available due to the environmental conditions of the renewable electrical energy source. Further, this allows that blind spots in the production of the energy carrier may be avoided during the conversion to the standard electrolysis container.

In one embodiment, the converter further comprises a first polarization converter and optionally the switching arrangement is adapted to connect the disconnected electrolyzer stack to a second polarization converter, wherein the first and/or the second polarization converter is adapted to provide a polarization voltage for the respective electrolyzer stack. In other words, the polarization converter may be adapted to provide a minimum voltage for maintaining the respective electrolyzer stack in an operative state. For instance, the electrolysis container may comprise two polarization converters wherein a first polarization converter may be connected to the downscaled and/or upscaled converter and to the subset of connected electrolyzer stacks via the switching arrangement. A second polarization converter may be connected to the subset of disconnected electrolyzer stacks via the switching arrangement.

Additionally or alternatively, the electrolysis container may comprise a polarization converter that is connected via a second switching arrangement to all electrolyzer stacks of the plurality of electrolyzer stacks wherein the second switching arrangement may be independent of the switching arrangement that connects the plurality of electrolyzer stacks to the downscaled and/or upscaled converter of the main power controller.

This provides the advantage that the respective electrolyzer stack may be kept in an operative state which is independent of whether the electrolyzer stack is connected or disconnected from the main power controller.

In one embodiment, the electrolyzer stacks are connected in series by means of the switching arrangement. In other words, an electrical connection of the plurality of electrolyzers in series by means of the switching arrangement may allow to disconnect of subset of electrolyzer stacks from the container by means of a switching element. The electrical connection in series may further allow the downscaled converter to output an electrical voltage that is inferior than an electrical voltage that is output by the upscaled converter.

Additionally, at least one more electrolyzer stack may respectively be disconnected in a sequence for downscaling the subset of connected electrolyzer stacks. For this, at least one switching element may be electrically arranged between two electrolyzer stacks in the switching arrangement and may be adapted to disconnect at least one electrolyzer stack. This provides the advantage that the number of electrolyzer stacks may flexibly be upscaled and downscaled by at least one switching element.

In one embodiment, the main power controller is adapted to measure the electrical power input and/or is adapted to receive an electrical power input information from the electrical energy source, particularly a wind speed. In other words, the main power controller may be adapted to measure an electrical voltage and an electrical current at a terminal of the main power controller connecting the main power controller to the electrical network and/or to the renewable electrical energy source in order to determine the electrical power input. Additionally or alternatively, main power controller may be adapted to receive an information comprising a current production of electrical energy by a generator controller of at least one renewable electrical energy source in order to determine the electrical power input.

This provides the advantage that the main power controller may obtain an improved forecast of the production of electrical power for converting the electrolysis container for lower or higher power production.

In one embodiment, the electrolysis container further comprises a backup gas processing unit that is adapted to flush at least one electrolyzer stack with an asphyxiant and/or an inert gas. In other words, the electrolysis container may comprise a separate gas processing unit to avoid gas quality altering due to intermittent operation and partial violation of different oxygen and hydrogen levels in the newly separated gasses. This provides an improved safety for the operation of the electrolysis container due to their increased operating range, particularly during a low power phase due to a low wind speed and/or solar irradiation.

The invention also relates to an electrolysis system with the features of claim 10 comprising said modified electrolysis container. In other words, the electrolysis system may comprise an electrical energy source, particularly a renewable electrical energy source, and said modified electrolysis container. The electrolysis system may further comprise at least one standard electrolysis container that comprises a main power controller and an electrolyzer stack, wherein the main power controller is adapted to receive an electrical power input from an electrical energy source and is further adapted to provide an electrical power output to the electrolyzer stack.

The electrical energy source may be directly connected to the respective electrolysis container in an island configuration or via an electrical network in a network configuration. Additionally or alternatively, the electrolysis system may comprise a central controller that is adapted to activate and/or deactivate the respective standard electrolysis container and/or the at least one modified electrolysis container depending on an electrical power produced by the electrical energy source.

Additionally, a main converter of the electrical energy source, for instance a wind turbine and/or a solar power unit, may interact with the main power controller by means of a reactive power injection and an active harmonic compensation which may increase a quality of electrical power of the electrical power system.

The invention also relates to a method with the features of claim 11 for operating said electrolysis system comprising a modified electrolysis container as described above and further comprising at least one standard electrolysis container that comprises a main power controller and an electrolyzer stack and a converter, wherein the main power controller is adapted to receive an electrical power input from an electrical energy source, particularly a renewable electrical energy source, and is further adapted to provide an electrical power output to the electrolyzer stack, comprising the steps of:
- If the electrical power input is below a second threshold value or above the second threshold value and below a third threshold value, disconnect at least one electrolyzer stack of the modified electrolysis container from the main power controller by means of the switching element of the switching arrangement;
- If the electrical power input is below the second threshold value, activate the downscaled converter of the modified electrolysis container and optionally deactivate the upscaled converter of the modified electrolysis container.

In other words, the main power controller may measure the electrical energy input at a terminal of the electrolysis container, particularly the modified and/or standard electrolysis container that is connected to the electrical energy source or to an electrical network. The main power controller may receive the electrical power input by means of a measurement probe at the terminal and/or from a generator controller of the electrical energy source via a communication link. The electrical power input may further be above a minimum electrical power input and below the second threshold value for activating the downscaled controller of the modified electrolysis container wherein the minimum electrical power input may correspond to an electrical power input from a wind turbine at a cut-in wind speed where the wind turbine is adapted to commence producing electrical power. Activate or deactivate the respective converter may mean to power up the respective converter and/or to electrically connect the respective converter to the plurality of electrolyzer stacks and/or to the electrical network.

Additionally or alternatively, the minimum electrical power input may correspond to an electrical power input from a solar power unit at a minimum solar irradiation where the solar power unit may be adapted to commence producing electrical power.

Additionally, if the electrical power input is above the second threshold value and below the third threshold value and optionally be decreasing over at least a time threshold value, for instance three measurement cycles of the main power controller, the at least one electrolyzer stack of the modified electrolysis container may be disconnected from the main power controller.

The main power controller of the modified electrolysis container may increase the electrical power output to the subset of connected electrolyzer stacks corresponding to the electrical power input from the electrical energy source, preferably until the electrical power output may reach a maximum value when the electrical power input may reach a first threshold value. The first threshold value may be a minimum level of electrical power input from the electrical energy source for the standard electrolysis container to power up.

With the electrical power input being between the first and the second threshold value, the main power controller of the modified container may be adapted to decrease the electrical power output to the subset of connected electrolyzer stacks corresponding to the electrical power input until the electrical power output may reach zero when the electrical power input may reach the second threshold value. The second threshold value may be greater than the first threshold value. Thus, the main power controller of the modified container may adjust the electrical power output to the subsect of connected electrolyzer stacks in an inverse relationship corresponding to the electrical power input. This provides the technical effect that the subset of connected electrolyzer stacks may be protected when the electrical power input becomes too high and that further blind spots during the conversion of the modified electrolysis container may be avoided.

The main power controller of the modified electrolysis container may be adapted to activate or deactivate the respective downscaled and upscaled controller of the modified electrolysis container and/or be adapted to disconnect or connect at least one electrolyzer stack to the main power controller by means of the switching element of the switching arrangement.

Additionally or alternatively, a central controller of the electrolysis system may be adapted to activate or deactivate the respective downscaled and upscaled controller of the modified electrolysis container and/or be adapted to disconnect or connect at least one electrolyzer stack to the main power controller by means of the switching element of the switching arrangement. Further, the central controller may control the main power controller.

This provides the advantage that an operating range of the electrolysis system is extended to a lower range of electrical power production, for instance due to a low wind speed and/or solar irradiation, such that blind spots in the production of an energy carrier such as hydrogen may be closed. This leads to an increased overall production of the energy carrier by means of renewable energy which may decrease the cost of the energy carrier.

In one embodiment, the method further comprises the steps of:
- If the electrical power input is above the second threshold value or above the second threshold value and below the third threshold value, connect the at least one disconnected electrolyzer stack of the modified electrolysis container to the main power controller by means of the switching element of the switching arrangement;
- If the electrical power input is above the second threshold value, deactivate the downscaled converter of the modified electrolysis container and optionally activate the upscaled converter of the modified electrolysis container.

In other words, if the main power controller of the modified electrolysis container receives an electrical power input that is above the second threshold value, the downscaled converter of the modified electrolysis container may be deactivated.

Additionally, if the electrical power input is above the second threshold value and below the third threshold value and further be increasing over at least a time threshold value, for instance three measurement cycles of the main power controller, the at least one disconnected electrolyzer stack or all electrolyzer stacks of the modified electrolysis container may be connected to the main power controller. Thus, the modified electrolysis container may be converted by the main power controller of the modified electrolysis container and/or by the central controller of the electrolysis system into a standard electrolysis container. Here, the time threshold values may be equal or different.

This provides the advantage, that the modified container may be converted as long as the electrical power input is between the second and third threshold value wherein other standard electrolysis containers may carry out the electrolysis process in order to cover all ranges of the electrical power input for producing an energy carrier by means of electrolysis.

In one embodiment, the method further comprises the steps of:
- If the electrical power input is above the third threshold value, activate the upscaled converter of the modified electrolysis container or deactivate the upscaled converter if the electrical power input is below the third threshold value;
- Optionally, activate the converter of the respective standard electrolysis container if the electrical power input is above a first threshold value of the respective standard electrolysis container or deactivate the converter if the electrical power input is below the first threshold value, wherein the first threshold value is preferably smaller than the third threshold value and/or the second threshold value.

In other words, if the electrical power input is above or below the third threshold value, particularly for a respective duration of at least a time threshold value, the main power controller of the modified electrolysis container may activate or deactivate the upscaled converter. The third threshold value may be greater than the second threshold value. Additionally, the respective standard electrolysis container may have their own first threshold value and may further be different from each other. The standard electrolysis container may be adapted to carry out the electrolysis process at a respective first threshold value that is smaller than the second threshold value. This provides the advantage that black spots due to the conversion of the modified electrolysis container to the standard electrolysis container may be avoided.

This provides further the advantage, that the modified container may be converted as long as the electrical power input is between the second threshold value and the third threshold value wherein other standard electrolysis containers may launch the electrolysis process in a sequence in order to cover all ranges of the electrical power input for producing the energy carrier by means of electrolysis.

The invention further relates to a computer-program with the features of claim 14 comprising instructions which, when the program is executed by a computer, particularly a main power controller of an electrolysis container, cause the computer to carry out the steps of said method.

The invention further relates to a controller with the features of claim 15 for an electrolysis container, particularly for said electrolysis container as described above and/or a controller for said electrolysis system as described above, comprising a computer-readable storage medium having stored thereon said computer program.

The controller may comprise at least one processor and a computer readable storage medium, wherein the computer readable storage medium comprises instructions which, when executed by the at least one processor, cause the controller to perform the steps of the method as described above. In other words, the at least one processor may be a microprocessor and/or a microcontroller and/or a FPGA (Field Programmable Gate Array and/or a DSP (Digital Signal Processor).

Further, the upscaled and/or downscaled converter may comprise diodes, thyristors or other self-switching elements and configurations.

The invention also relates to realizations comprising a combination of the features of several of the described embodiments.

### Brief description of the drawings

The present disclosure will be more readily appreciated by reference to the following detailed description when being considered in connection with the accompanying drawings in which:
Figure 1 is a schematic view of an electrolysis system comprising standard electrolysis containers and a modified electrolysis container that are connected to a plurality of renewable electrical energy sources via an electrical network;
Figure 2 shows a yield curve of electrical power produced by a wind turbine as a renewable electrical energy source in relation to the wind speed;
Figure 3 is a schematic view of a modified electrolysis container which is adapted to operate at an increased operating range of electrical power input from the renewable electrical energy source;
Figure 4 is a schematic overview of the method for operating the electrolysis system in relationship to the yield curve of a wind turbine as renewable electrical energy source; and
Figure 5 is a schematic flow diagram of said method.

### Detailed description of preferred embodiments

In the following, the invention will be explained in more detail with reference to the accompanying figures. In the Figures, like elements are denoted by identical reference numerals and repeated description thereof may be omitted in order to avoid redundancies.

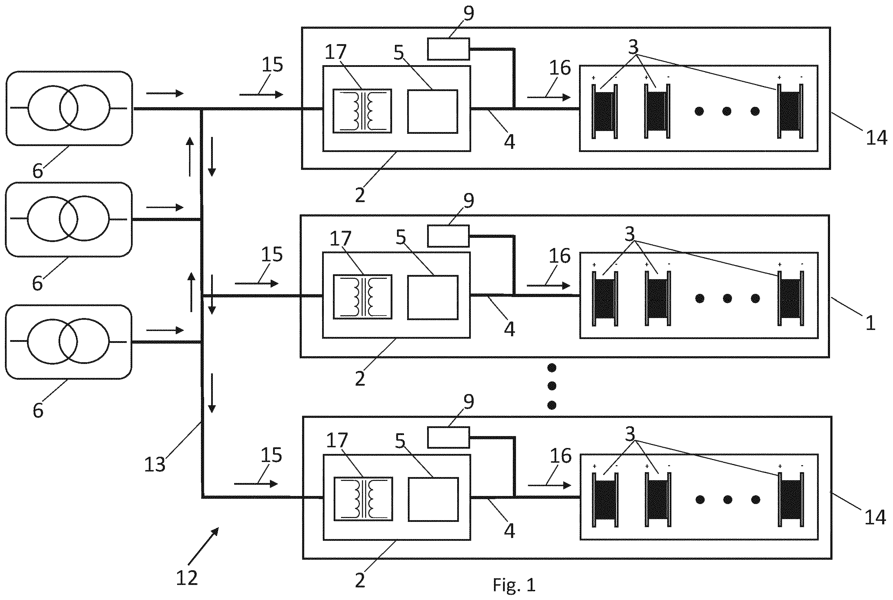

Figure 1 shows a schematic view of the electrolysis system 12 that comprises at least one standard electrolysis container 14 comprising a plurality of electrolyzer stacks 3 that are adapted to produce an energy carrier by means of an electrolysis process. Preferably, the electrolyzer stacks 3 are connected in series by means of the switching arrangement 4. The switching arrangement 4 connects the plurality of electrolyzer stacks 3 to the main power controller 2, particularly to the converter 5 and optionally to the first polarization converter 9. The energy carrier may be hydrogen or a synthetic fuel for instance. Alternatively, the electrolyzer stack 3 may be a battery. The standard electrolysis container 14 further comprises a main power controller 2 that comprises a transformer 17 and a converter 5 in order to provide the electrical power output 16 to the plurality of electrolyzer stacks 3 via the switching arrangement 4. The standard electrolysis container 14 further comprises a first polarization converter 9 which is adapted to provide a minimum direct current voltage to the respective electrolyzer stack 3 in order to remain on a standby mode for operation.

Alternatively, the converter 5 may comprise the first polarization converter 9.

The electrolysis system 12 further comprises an electrical energy source 6 which preferably is a renewable electrical energy source 6 such as a wind turbine or a solar power unit. The electrical energy source 6 is adapted to provide an electrical power input 15 to the standard electrolysis container 14 via an electrical connection in an island configuration or via an electrical network 13 in a network configuration wherein the electrical power input 15 is converted into the energy carrier by means of the standard electrolysis container 14 and/or the modified electrolysis container 1.

The main power controller 2 is adapted to convert the electrical power input 15 from the renewable electrical energy source 6 into the electrical power output 16 for the plurality of electrolyzer stacks 3 by means of the transformer 17 and the converter 5. The electrical power input 15 from the electrical energy source 6 may be based on an alternating current whereas the electrical power output 16 to the plurality of electrolyzer stacks 3 may be based on a direct current. The converter 5 is adapted to convert the alternating current from the transformer 17 into a direct current for the plurality of electrolyzer stacks 3.

Alternatively, the electrical power input 15 may be based on a direct current wherein the main power controller 15 alternatively comprises a DC-DC-converter 5.

The standard electrolysis container 14 comprises a plurality of electrolyzer stacks 3 wherein a number of electrolyzer stacks 13 cannot be scaled up or down. Thus, the standard electrolysis container 14 requires a minimum level of electrical power input 15 from the renewable electrical energy source 6 in order to carry out the electrolysis process of the respective electrolyzer stack 3. The problem with the renewable electrical energy source 6 is that they cannot be adjusted to increase the production of electrical power as environmental conditions of the electrical energy source 6 cannot be changed. For instance, a wind turbine as the electrical energy source 6 may require a minimum wind speed for producing at least the minimum level of electrical power for the electrolyzer stacks 3 of the standard electrolysis container 14 to carry out the electrolysis process. If the wind speed is less than said minimum wind speed, the electrical energy cannot be converted into the energy carrier by the standard electrolysis container 14 and would thus be lost. The same problem may also arise if the electrical energy source 6 is a solar power unit wherein a minimum solar irradiation is required in order to produce at least the minimum electrical power input 15 to carry out the electrolysis process.

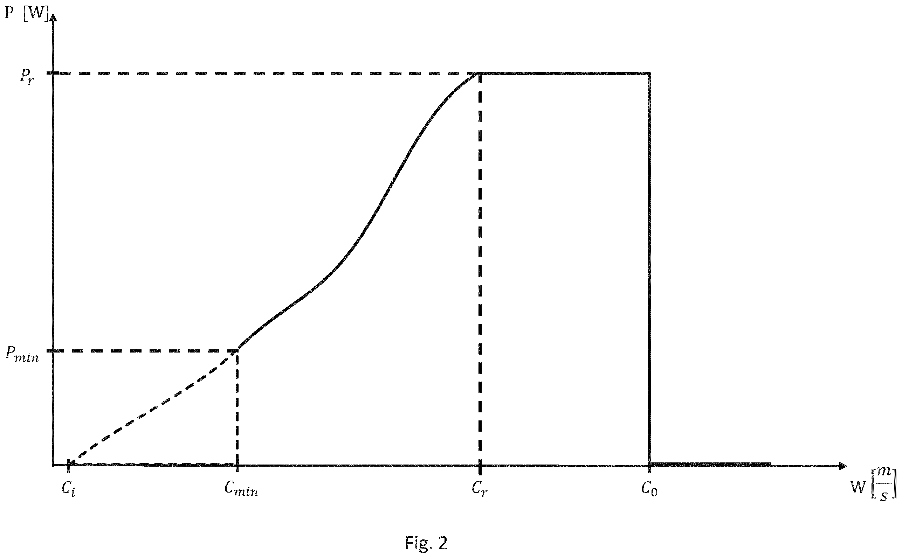

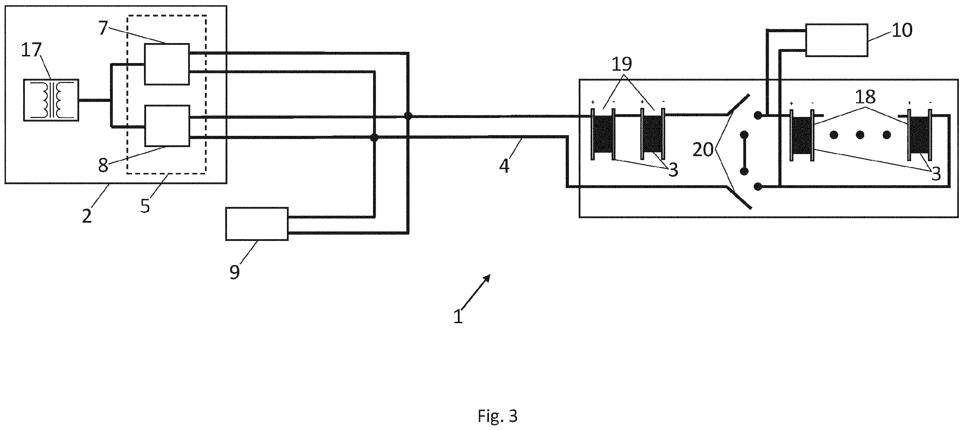

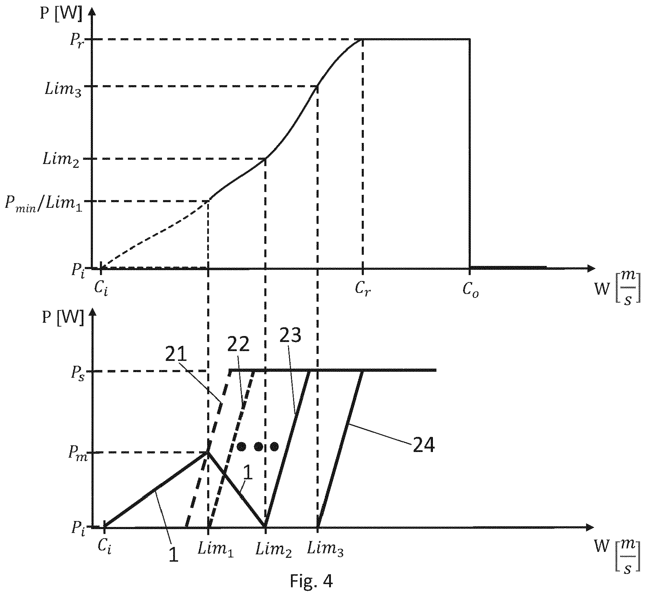

The electrolysis system further comprises a modified electrolysis container 1 which in contrast to the standard container 14 is adapted to produce the energy carrier at a lower electrical power input from the electrical energy source 6 than the standard container 14 as depicted in more detail in Figure 2. Further, the modified electrolysis container 1 is adapted to be converted into a standard electrolysis container 14 when the electrical power input 15 value from the electrical energy source is above a threshold value as depicted in more detail in Figures 3 and 4.

The aim is thus to provide a modified electrolysis container, particularly a downscaled electrolysis container which is adapted to carry out the electrolysis process of the electrolyzer stack 3 at an electrical power input 15 that is below the minimum electrical power input of the standard electrolysis container 14 which increases the operating range of the electrolysis system 1 and thus the amount of produced energy carrier.

Figure 2 shows a yield curve of electrical power P produced by a wind turbine as renewable electrical energy source 6 in relationship to a wind speed W. At cut-in wind speed *Cᵢ* the wind turbine may start producing electrical power wherein a pitch system of the wind turbine may adjust a rotor blade of the wind turbine at an optimum angle in relation to the wind. The production of electrical power by the wind turbine rises with increasing wind speed until a minimum electrical power *Pₘᵢₙ* is produced that is sufficient for the standard electrolysis container 14 to carry out the electrolysis process at a corresponding minimum wind speed ***Cₘᵢₙ**.* Said standard electrolysis container 14 is adapted to convert the electrical power input 15 above the minimum electrical power ***Pₘᵢₙ*** up to a rated electrical power ***Pᵣ*** into the energy carrier by means of the electrolysis process of the respective electrolyzer stack 3. The rated electrical power ***Pᵣ*** may be a maximum electrical power at a rated wind speed ***Cᵣ*** where the wind turbine may safely produce electrical power. Starting from the rated wind speed ***Cᵣ***, the pitch system may cut out a rotor blade of the wind turbine from the wind such that a wind with a wind speed above the rated wind speed ***Cᵣ*** does not produce more electrical power than the rated electrical power ***Pᵣ***. Further, the pitch system may cut out the rotor blade from the wind when the wind speed reaches the cut-out speed ***C*₀** such that an electrical power of zero is produced.

Alternatively, the same conditions also would apply to a solar power unit wherein the wind speed may be replaced by a solar irradiation level.

Thus, the standard electrolysis container 14 may only convert the electrical power between the minimum electrical power

***Pₘᵢₙ*** and the rated electrical power ***Pᵣ*** into the energy carrier whereas the electrical power produced below the minimum electrical power ***Pₘᵢₙ*** is not converted into the energy carrier by only using the standard electrolysis container 14 and may thus be lost. A modified electrolysis container 1 that is adapted to convert an electrical power below the minimum electrical power ***Pₘᵢₙ*** into the energy carrier is schematically shown in Figure 3.

Figure 3 is a schematic view of a modified electrolysis container 1 that comprises a main power controller 2 and a plurality of electrolyzer stacks 3 that are connected via a switching arrangement 4 to a converter 5 of the main power controller 2. In contrast to the standard electrolysis container 14, the converter 5 of the main power controller 2 of the modified electrolysis container 1 comprises a downscaled converter 7 and an upscaled converter 8 that are connected in parallel. The downscaled converter 7 is adapted to convert an electrical power input 15 smaller than the minimum electrical power ***Pₘᵢₙ**,* optionally smaller than or equal to a second threshold value ***Lim*₂** of the electrical power input from the electrical energy source 6 that is smaller than the minimum electrical power ***Pₘᵢₙ,*** into a direct current that is sufficient for the electrolyzer stacks 3 to carry out the electrolysis process.

In contrast to the downscaled converter 7, the upscaled converter 8 is adapted to convert an electrical power input 15 equal to or greater than the minimum electrical power input ***Pₘᵢₙ*** and optionally smaller than or equal to the rated electrical power ***Pᵣ*** into a direct current level for the plurality of electrolyzer stacks 3.

The downscaled converter 7 is only activated if the upscaled converter 8 is deactivated and vice versa. The downscaled converter 7 and/or the upscaled converter 8 may be activated by the main power controller 2.

The modified electrolysis container 1 may further comprise a first polarization converter 9 that is adapted to provide a minimum direct current voltage to the respective electrolyzer stack 3 for a standby mode of operation.

Additionally or alternatively, the downscaled converter 7 and the upscaled converter 8 may also comprise the first polarization converter 9.

The electrolyzer stacks 3 are preferably connected in series by means of the switching arrangement 4. The switching arrangement 4 is adapted to separate the plurality of electrolyzer stacks 3 into a subset of disconnected electrolyzer stacks 18 and a subset of connected electrolyzer stacks 19, particularly by means of the switching element 20 that is electrically arranged between two electrolyzer stacks 3 in the switching arrangement 4. The subset of disconnected electrolyzer stacks 18 may be disconnected from the switching arrangement 4 and/or the converter 5, particularly the upscaled converter 8, by means of the switching element 20.

The modified electrolysis container 1 further comprises a second polarization converter 10 that is adapted to provide a minimum direct current voltage to the respective electrolyzer stack 3 of the subset of disconnected electrolyzer stacks 19 in order to maintain a standby mode of operation.

For instance, the switching arrangement 4 is further adapted to disconnect at least one electrolyzer stack 3 from the switching arrangement 4 and/or from the converter 5 of the main power controller 2 by at least one switching element 20 that optionally is electrically arranged between two electrolyzer stacks 3. The switching element 20 is adapted to connect or disconnect the subset of electrolyzer stacks 18 from the switching arrangement 4 and/or the converter 5. The subset of disconnected electrolyzer stacks 3 may be at least one electrolyzer 3 from the plurality of electrolyzers 3.

The switching arrangement 4 is adapted to connect the subset of connected electrolyzer stacks 19 only to the downscaled converter 7 and additionally the plurality of electrolyzer stacks 3 comprising the subset of disconnected electrolyzer stacks 18 and the subset of connected electrolyzer stacks 19 only to the upscaled converter 8.

Additionally or alternatively, the converter 5 may comprise a further switching element that is adapted to connect or disconnect the downscaled converter 7 and/or upscaled converter 8 to the switching arrangement 4 depending on a respective switch state of the switching element 20.

Additionally or alternatively, the main power controller 2 is adapted to power up the downscaled converter 7 and to power down the upscaled converter 8 and vice versa.

The downscaled converter 7 is adapted to provide a direct current voltage that is sufficient for the respective electrolyzer stack 3 from the subset of connected electrolyzer stacks 19 to perform the electrolysis process for producing the energy carrier. For instance, the downscaled converter 7 may provide an electrical power output 16 of 2 Megawatt. The upscaled converter 8 may be adapted to provide a direct current voltage that is sufficient for the respective electrolyzer stack 3 from the plurality of electrolyzer stacks 3 to perform the electrolysis process for producing the energy carrier. Regarding the standard electrolysis container 14 from Fig. 1, the modified electrolysis container 1 may correspond to the standard electrolysis container 14 when all electrolyzer stacks 3 from the plurality of electrolyzer stacks 3 are connected to the upscaled converter 8 by means of the switching arrangement 4. For instance, the upscaled converter 8 may provide an electrical power output 16 of 5 Megawatt.

Thus, the modified electrolysis container 1 is adapted to be converted from the modified electrolysis container 1 into a standard electrolysis container 14 by activating or deactivating the downscaled 7 and/or upscaled converter 8 and by connecting or disconnecting the subset of disconnected electrolyzer stacks 18.

Figure 4 is a schematic overview of a method for operating the electrolysis system 1 of Figure 1 that comprises at least one modified electrolysis container 1 according to Figure 3. The upper chart depicts the yield curve from Figure 2 of electrical power input 15 from renewable electrical energy source 6 such as a wind turbine depending on the wind speed. The lower chart of Figure 4 shows the amount of electrical power input 14 from the renewable electrical energy source 6 that is converted by the respective standard electrolysis container 14 and/or the modified electrolysis container 1 into the energy carrier depending on the wind speed.

Alternatively, the renewable electrical energy source 6 may be a solar power unit wherein the wind speed may be replaced with a solar power irradiation level.

In case of a wind turbine as renewable electrical energy source 6, the respective electrical power threshold values ***Lim*₁, *Lim*₂** and ***Lim*₄** correspond to a respective wind speed ***W*** as denoted by the dashed lines. The first threshold value ***Lim*₁** corresponds to the minimum electrical power ***Pₘᵢₙ*** and/or the corresponding cut-in wind speed ***Cᵢ***. The second threshold value ***Lim*₂** corresponds to an electrical power input 15 which is above the first threshold value ***Lim*₁***.* For instance, the second threshold value ***Lim*₂** may correspond to a maximum level of electrical power input 15 the subset of connected electrolyzer stacks 18 of the modified electrolysis container 1 may be capable of converting into the energy carrier without damaging the electrolyzer stacks 3. The first threshold value ***Lim*₁** is a minimum value of electrical power input 15 for the standard electrolysis container 14 to perform the electrolysis process.

When the electrical power input level of the electrical power input 15 is below the first threshold value ***Lim*₁**, the main power controller 2 of the modified container 1 is adapted to activate the downscaled converter 7 and to connect the subset of connected electrolyzer stacks 19 from the plurality of electrolyzer stacks 3 to the downscaled converter 7 by means of the switching arrangement 4, wherein the subset of disconnected electrolyzer stacks 18 is electrically isolated or disconnected from the downscaled converter 7 by means of the switching arrangement 4.

Optionally, the second polarization converter 10 is adapted to provide to the subset of disconnected electrolyzer stacks 18 a minimum direct current voltage level in order to main the respective electrolyzer stacks 3 in a standby operation mode.

Thus, the modified electrolysis container 1 produces the energy carrier by means of the subset of connected electrolyzer stacks 19 with electrical power input 15 values between zero or optionally a cut-in electrical power level ***Pᵢ*** corresponding to the cut-in wind speed ***Cᵢ*** and the second threshold value ***Lim*₂***.* The second threshold value ***Lim*₂** may thereby correspond to a rated electrical power input 15 level ***Pₘ*** of the modified electrolysis container 1, particularly of the subset of connected electrolyzer stacks 18, wherein a maximum amount of the energy carrier may be produced by the subset of connected electrolyzer stacks 18 at the first threshold value ***Lim*₁*.*** Here, the modified electrolysis container converts the electrical power ***Pₘ*** into the energy carrier.

Additionally, if the electrical power input 15 level is above the first threshold value ***Lim*₁** and below the second threshold value ***Lim*₂***,* the main power controller 2 of the modified electrolysis container 1 is adapted to decrease the electrical power output 16 to the subset of connected electrolyzer stacks 18 until the electrical power output 16 reaches zero when the electrical power input 15 level has reached the second threshold value ***Lim*₂***.* This may prevent the electrolyzer stacks 3 in the subset of connected electrolyzer stacks 19 from damage.

The first standard container 21 carries out the electrolysis process in the respective electrolyzer stack 3 when the electrical power input 15 level is above or equal the first threshold value ***Lim*₁** of the first standard container 21, whereas the first standard container 21 is not adapted to carry out the electrolysis process when the electrical power input 15 level is below the first threshold value ***Lim*₁*.*** Further, the standard containers 21, 22 and 23 have their respective first threshold value ***Lim*₁** such that they may activate in a sequence.

If the electrical power input 15 is above the second threshold value ***Lim*₂** and below the third threshold value ***Lim*₂** and further be increasing over at least a time threshold value, for instance three measurement cycles of the main power controller 2, at least one electrolyzer stack 18 that has previously been disconnected by means of the switching element 20 or all electrolyzer stacks 3 of the modified electrolysis container 1 may be connected to the main power controller 2 of the modified electrolysis container 1.

Additionally, the main power controller 2 may be adapted to activate the upscaled converter 8.

The main power controller 2 of the second standard electrolysis container 22 and the third standard container 23 are adapted to activate the converter 5 to carry out the electrolysis process in the respective electrolyzer stacks 3 of the second standard container 22 when the electrical power input 15 level is above the respective first threshold value ***Lim*₁** of the second 22 and third standard container 23 which respectively are above the second threshold value ***Lim*₂** and below the third threshold value ***Lim*₃.** The third threshold value ***Lim*₃** is greater than the second threshold value ***Lim*₂***.* Thus, the respective main power controller 2 of the first 21, second 22 and third standard container 23 is adapted to activate the respective converter 5 of the standard containers 21, 22 and 23 at a respective electrical power input 15 level that is between the first threshold value ***Lim*₁** and the third threshold value *Lim*₃*.* This provides the advantage that the respective standard containers 21, 22 and 23 are activated in a sequence when the electrical power input 15 level from the electrical energy source is sufficiently high. The respective first 21, second 22 and third standard container 23 respectively convert the electrical power ***P_{S}*** into the energy carrier.

Additionally or alternatively, if the electrical power input 15 level of the first standard electrolysis container 21 is below the first threshold value ***Lim*₁** that optionally is below the second threshold value ***Lim*₂**, the main power controller 2 of the first standard electrolysis container 21 may be adapted to activate and/or deactivate the converter 5. This provides the advantage, that black spots of energy harvesting may be avoided when the electrical power input 15 varies due to changing environmental conditions such as a changing wind speed and/or solar irradiation.

When the electrical power input 15 level is below or equal to a third threshold value ***Lim*₃**, the upscaled converter 8 of the main power controller 2 of the modified electrolysis container 1 is adapted to launch the electrolysis process of the respective electrolyzer stack 3 from the plurality of electrolyzer stacks 3, wherein the modified electrolysis container 1 may correspond to the standard electrolysis containers 21, 22 and 23. For instance, if the electrical power input 15 level is equal to or above the third threshold value ***Lim*₃**, the main power controller 2 of the modified electrolysis container is adapted to activate the upscaled converter 8 and optionally to connect all electrolyzer stacks 3 from the plurality of electrolyzer stacks 3, particularly the subset of disconnected electrolyzers 18 and the subset of connected electrolyzers 19, to the upscaled controller 8 by means of the switching arrangement 4. Thus, the modified electrolysis container 1 converts the electrical power ***P_{S}*** into the energy carrier which essentially corresponds to the same electrical power ***P_{S}*** that the first 21, second 22 and third standard electrolysis container 23 convert into the energy carrier.

This provides the advantage that the modified electrolysis container 1 may convert an electrical power ***Pₘ*** when the electrical power input 15 from the renewable electrical energy source is between the cut-in electrical power ***Pᵢ*** and the first threshold value ***Lim*₁** and/or second threshold value ***Lim*₂*.*** Further, the modified electrolysis container 1 is adapted to convert the electrical power ***P_{S}*** when the electrical power input is equal to or above the third threshold value ***Lim*₂***.*

In case of decreasing wind speeds, the main power adapter of the modified electrolysis container 1 is adapted to deactivate the upscaled converter 8 if the electrical power input 15 level is below the third threshold value ***Lim*₃**, particularly for a duration longer than a time threshold value. Additionally, if the electrical power input 15 is above the second threshold value ***Lim*₂** and below the third threshold value ***Lim*₃** and further be decreasing over at least a time threshold value, for instance three measurement cycles of the main power controller 2, the at least one electrolyzer stack 18 of the modified electrolysis container 1 may be disconnected from the main power controller 2 of the modified electrolysis container 1.

Additionally or alternatively, the main power controller 2 is adapted to connect the subset of connected electrolyzer stacks 19 to the downscaled converter 7 if the electrical power input 15 level is below the third threshold value ***Lim*₃**, particularly for a duration longer than the time threshold value.

Additionally, the respective main power controller 2 of the first 21, second 22 and third standard container 23 may be adapted to deactivate the respective converter 5 at a respective electrical power input 15 level, particularly their respective first threshold value ***Lim*₁** that is between the second threshold value ***Lim*₂** and the third threshold value *Lim*₃*.* This provides the advantage that the respective standard containers 21, 22 and 23 may be deactivated in a sequence when the electrical power input 15 level from the electrical energy source 6 is decreasing.

Additionally or alternatively, when the electrical power input 15 level is equal to or below the second threshold value ***Lim*₂***,* the main power controller 2 of the modified electrolysis container 1 is adapted to activate the downscaled converter 7 and optionally to connect the subset of connected electrolyzer stacks 19 to the downscaled converter 7. Further, the main power controller 2 of the modified electrolysis container 1 is adapted to increase the electrical power output 16 to the subset of connected electrolyzer stacks 19 until the electrical power input value decreases to the first threshold value ***Lim*₁*.*** If the electrical power input 15 level is equal to or below the first threshold value ***Lim*₁**, the main power controller is adapted to decrease the electrical power output 16 to the subset of connected electrolyzer stacks 19, preferably until zero when the electrical power input 15 level is equal to or below the cut-in electrical power ***Pᵢ*** at the cut-in wind speed ***Cᵢ*** of the electrical energy source 6.

The same principles also apply to a solar power unit as electrical energy source 6 wherein the wind speed may be replaced by a solar irradiation level.

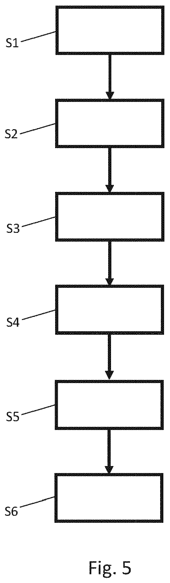

Figure 5 shows a schematic process chart of a method for operating said electrolysis system 12 comprising said modified electrolysis container 1 and further comprising at least one standard electrolysis container 14 that comprises a main power controller 2 and an electrolyzer stack 3 and a converter 5, wherein the main power controller 2 is adapted to receive an electrical power input from an electrical energy source 6, particularly a renewable electrical energy source 6, and is further adapted to provide an electrical power output to the electrolyzer stack 3.

In a first step S1 of said method, if the electrical power input 15 is below a second threshold value ***Lim*₂** or above the second threshold value ***Lim*₂** and below a third threshold value ***Lim*₃**, disconnect at least one electrolyzer stack 18 of the modified electrolysis container 1 from the main power controller 2 by means of the switching element 20 of the switching arrangement 4.

Additionally, if the electrical power input 15 is above the second threshold value ***Lim*₂** and below the third threshold value ***Lim*₃** and further be decreasing over at least a time threshold value, for instance three measurement cycles of the main power controller 2, the at least one electrolyzer stack 18 of the modified electrolysis container 1 may be disconnected from the main power controller 2 of the modified electrolysis container 1.

In a second step S2, if the electrical power input 15 is below the second threshold value ***Lim*₂***,* activate the downscaled converter 7 of the modified electrolysis container 1 and optionally deactivate the upscaled converter 8 of the modified electrolysis container 1.

In a third step S3, if the electrical power input 15 is above the second threshold value ***Lim*₂** or above the second threshold value ***Lim*₂** and below the third threshold value ***Lim*₂***,* connect the at least one disconnected electrolyzer stack 18 of the modified electrolysis container 1 to the main power controller 2 by means of the switching element 20 of the switching arrangement 4.

Additionally, if the electrical power input 15 is above the second threshold value ***Lim*₂** and below the third threshold value ***Lim*₃** and further be increasing over at least a time threshold value, for instance three measurement cycles of the main power controller 2, the at least one disconnected electrolyzer stack 18 or all electrolyzer stacks 3 of the modified electrolysis container 1 may be connected to the main power controller 2 of the modified electrolysis container 1. In a fourth step S4, if the electrical power input 15 is above the second threshold value ***Lim*₂**, deactivate the downscaled converter 7 of the modified electrolysis container 1 and optionally activate the upscaled converter 8 of the modified electrolysis container 1.

In a fifth step S5, if the electrical power input 15 is above the third threshold value ***Lim*₂***,* activate the upscaled converter 8 of the modified electrolysis container 1 or deactivate the upscaled converter 8 if the electrical power input 15 is below the third threshold value ***Lim*₂*.***

In an optional sixth step S6, activate the converter 5 of the respective standard electrolysis container 14 if the electrical power input 15 is above a first threshold value ***Lim*₁** of the respective standard electrolysis container 14 or deactivate the converter 5 if the electrical power input 15 is below the first threshold value ***Lim*₁**, wherein the first threshold value ***Lim*₁** is preferably smaller than the third threshold value ***Lim*₃** and/or the second threshold value ***Lim*₂***.*

It will be obvious for a person skilled in the art that these embodiments and items only depict examples of a plurality of possibilities. Hence, the embodiments shown here should not be understood to form a limitation of these features and configurations. Any possible combination and configuration of the described features can be chosen according to the scope of the invention.

## Claims

1. Electrolysis container (1) comprising a main power controller (2) and a plurality of electrolyzer stacks (3) that are connected via a switching arrangement (4) to the main power controller (2) that is adapted to convert by means of a converter (5) an electrical power input (15) from an electrical energy source (6), particularly from a renewable electrical energy source (6), to an electrical power output (16) for the electrolyzer stacks (3), wherein the main power controller (2) is adapted to disconnect at least one electrolyzer stack (3) by means of a switching element (20) of the switching arrangement (4), wherein the converter (5) comprises a downscaled converter (7) and an upscaled converter (8) and is adapted to activate only the downscaled converter (7) if at least one electrolyzer stack (3) is disconnected from the main power controller (2).

2. Electrolysis container (1) according to claim 1, **characterized in that** the downscaled converter (7) is adapted to output a downscaled electrical power output (16) and the upscaled converter (8) is adapted to output an upscaled electrical power output (16), particularly a respective minimum electrical power for the electrolyzer stack (3) that is connected to the main power controller (2) to be operative.

3. Electrolysis container (1) according to one of the preceding claims, **characterized in that** the main power controller (2) is adapted to activate only the upscaled converter (8) if all electrolyzer stacks (3) are connected to the main power controller (2) and/or if none electrolyzer stack (3) is disconnected from the main power controller (2).

4. Electrolysis container (1) according to one of the preceding claims, **characterized in that** the main power controller (2) is adapted to activate only the downscaled converter (7) if the electrical power input (15) from the electrical energy source (6) is below a second threshold value (***Lim*₂**) and/or the main power controller (2) is adapted to deactivate the downscaled converter (7) if the electrical power input (15) from the electrical energy source (6) is above the second threshold value (***Lim*₂**), and/or
wherein the main power controller (2) is adapted to disconnect at least one electrolyzer stack (3) from the main power controller (2) if the electrical power input (15) from the electrical energy source (6) is below the second threshold value (***Lim*₂**) or above the second threshold value (***Lim*₂**) and below a third threshold value (***Lim*₃**).

5. Electrolysis container (1) according to one of the preceding claims, **characterized in that** the main power controller (2) is adapted to activate the upscaled converter (8) if the electrical power input (15) from the electrical energy source (6) is above the second threshold value (***Lim*₂**) or above the third threshold value (***Lim*₃**) and/or the main power controller (2) is adapted to deactivate the upscaled converter (8) if the electrical power input (15) from the electrical energy source (6) is below the second threshold value (***Lim*₂**) or below the third threshold value (***Lim*₃**), wherein preferably the third threshold value (***Lim*₃**) is greater than the second threshold value (***Lim*₂**), and/or
wherein the main power controller (2) is adapted to connect the at least one disconnected electrolyzer stack (3) to the main power controller if the electrical power input (15) from the electrical energy source (6) is above the second threshold value (***Lim*₂**) and/or below the third threshold value (*Lim*₃).

6. Electrolysis container (1) according to one of the preceding claims, **characterized in that** the converter (5) further comprises a first polarization converter (9) and optionally the switching arrangement (4) is adapted to connect the disconnected electrolyzer stack (3) to a second polarization converter (10), wherein the first and/or the second polarization converter (10) is adapted to provide a polarization voltage for the respective electrolyzer stack (3).

7. Electrolysis container (1) according to one of the preceding claims, **characterized in that** the electrolyzer stacks (3) are connected in series by means of the switching arrangement (4) .

8. Electrolysis container (1) according to one of the preceding claims, **characterized in that** the main power controller (2) is adapted to measure the electrical power input (15) and/or is adapted to receive an electrical power input information from the electrical energy source (6), particularly a wind speed.

9. Electrolysis container (1) according to one of the preceding claims, **characterized in that** further comprising a backup gas processing unit (11) that is adapted to flush at least one electrolyzer stack (3) with an asphyxiant and/or an inert gas.

10. Electrolysis system (12) comprising at least one electrolysis container (1) according to one of the preceding claims.

11. Method for operating the electrolysis system (12) of claim 10 comprising a modified electrolysis container (1) of one of the claims 1 to 9 and further comprising at least one standard electrolysis container (14) that comprises a main power controller (2) and an electrolyzer stack (3) and a converter (5), wherein the main power controller (2) is adapted to receive an electrical power input (15) from an electrical energy source (6), particularly a renewable electrical energy source (6), and is further adapted to provide an electrical power output (16) to the electrolyzer stack (3), comprising the steps of:
- If the electrical power input (15) is below a second threshold value (***Lim*₂**) or above the second threshold value (***Lim*₂**) and below a third threshold value (***Lim*₃**), disconnect at least one electrolyzer stack (18) of the modified electrolysis container (1) from the main power controller (2) by means of the switching element (20) of the switching arrangement (4);
- If the electrical power input (15) is below the second threshold value (***Lim*₂**), activate the downscaled converter (7) of the modified electrolysis container (1) and optionally deactivate the upscaled converter (8) of the modified electrolysis container (1).

12. Method according to claim 11, further comprising the steps of:
- If the electrical power input (15) is above the second threshold value (***Lim*₂**) or above the second threshold value (***Lim*₂**) and below the third threshold value (***Lim*₃**)*,* connect the at least one disconnected electrolyzer stack (18) of the modified electrolysis container (1) to the main power controller (2) by means of the switching element (20) of the switching arrangement (4);
- If the electrical power input (15) is above the second threshold value (***Lim*₂**)*,* deactivate the downscaled converter (7) of the modified electrolysis container (1) and optionally activate the upscaled converter (8) of the modified electrolysis container (1).

13. Method according to claim 11 or 12, further comprising the steps of:
- If the electrical power input (15) is above the third threshold value (***Lim*₃**)*,* activate the upscaled converter (8) of the modified electrolysis container (1) or deactivate the upscaled converter (8) if the electrical power input (15) is below the third threshold value (***Lim*₂**) ;
- Optionally, activate the converter (5) of the respective standard electrolysis container (14) if the electrical power input (15) is above a first threshold value (***Lim*₁**) of the respective standard electrolysis container (14) or deactivate the converter (5) if the electrical power input (15) is below the first threshold value (***Lim*₁**)*,* wherein the first threshold value (***Lim*₁**) is preferably smaller than the third threshold value (***Lim*₃**) and/or the second threshold value (***Lim*₂**)*.*

14. Computer program comprising instructions which, when the program is executed by a computer, particularly a main power controller (2) of an electrolysis container (1), cause the computer to carry out the steps of the method of claims 11 to 13.

15. Controller for an electrolysis container (1), particularly for the electrolysis container (1) of claims 1 to 9 and/or a controller for the electrolysis system (12) of claim 10, comprising a computer-readable storage medium having stored thereon the computer program of claim 14.
